# FASCICULE DE BREVET EUROPEEN

(11) **EP 4 132 848 B1**
(45) Date de publication et mention de la délivrance du brevet: **31.01.2024**
(21) Numéro de dépôt: 21723889.8
(22) Date de dépôt: 08.04.2021
(51) Int. Cl.: B64F 5/40, B64F 5/50, F02C 7/18, B64D 45/00, B64D 33/08, F02C 7/04

(54) **ORGANE D'OBTURATION AMOVIBLE POUR UNE PARTIE FEMELLE LOGEE DANS UNE OUVERTURE EXTERIEURE D'UNE NACELLE DE MOTEUR D'AERONEF**
ABNEHMBARE SCHLIESSELEMENT FÜR EINEN WEIBLICHEN TEIL DER IN EINER AUSSEREN ÖFFNUNG EINER FLUGZEUGTRIEBWERKSGONDEL UNTERGEBRACHT IST
REMOVABLE CLOSURE BODY FOR A FEMALE PART HOUSED IN AN EXTERIOR OPENING OF AN AIRCRAFT ENGINE NACELLE

(30) Priorité: 10.04.2020 FR 2003633
(43) Date de publication de la demande: 15.02.2023
(73) Titulaire: Safran Nacelles, 76700 Gonfreville-l'Orcher (FR)
(72) Inventeur: MERIEL, Olivier, 77550 MOISSY-CRAMAYEL (FR); LUCIENNE, Vivien, 77550 MOISSY-CRAMAYEL (FR)
(74) Mandataire: Casalonga
(86) Numéro de dépôt international: PCT/FR2021/050626
(87) Numéro de publication internationale: WO 2021/205126

(56) Documents cités:
- EP-A1- 3 260 939
- EP-A1- 3 447 272
- FR-A1- 2 879 564
- FR-A1- 2 936 778
- US-A1- 2015 075 132

## Description

### Domaine technique de l'invention

La présente invention concerne le domaine des aéronefs, et notamment des carénages d'un moteur d'aéronef, appelés « nacelle ».

Plus particulièrement, l'invention concerne des organes d'obturation configurés pour obturer des ouvertures extérieures de moteurs d'aéronefs, et notamment pratiquées dans leur nacelle.

### Etat de la technique antérieure

Une nacelle d'aéronef permet la liaison du moteur au fuselage de l'aéronef, mais également de contrôler la température interne du moteur par l'intermédiaire d'une ou plusieurs ouvertures d'entrée d'air destinées à refroidir le moteur.

La nacelle comprend, à cet effet, une ou plusieurs ouvertures extérieures, telles que des organes d'entrée d'air ou écopes, appelées « ventilation scoop » en termes anglo-saxons, configurées pour amener de l'air frais dans certains zones du moteur, notamment des zones à températures élevées, et un ou plusieurs organes de ventilation ou grilles de ventilation, appelées « ventilation grid », permettant d'évacuer vers l'extérieur de la nacelle de l'air chaud du moteur afin de lutter contre la formation de points chauds sur des éléments du moteur, ou d'évacuer d'éventuelles surpressions du moteur.

Lors du stationnement prolongé de l'aéronef, il est connu de venir obturer les ouvertures extérieures de la nacelle du moteur, afin de les protéger contre l'intrusion de corps étrangers, tels que de la poussière, de la faune ou encore de la flore.

Les organes d'obturation des ouvertures extérieures de la nacelle sont mis en place en utilisant un équipement de soutien au sol, dit « ground support equipment », d'acronyme « GSE » en termes anglo-saxons. Ainsi, l'interface entre les organes d'obturation et la nacelle impose des contraintes de conception de l'équipement de soutien au sol.

En effet, la forme complexe de la nacelle impose une très grande maîtrise dans la conception et la forme de l'organe d'obturation, qui nécessite des tolérances de fabrication très faibles dudit organe.

On connait des organes d'obturation d'orifices d'entrée d'air ou d'évacuation sous la forme d'un ensemble complexe de pièces mécaniques rigides comprenant une plaque métallique emboutie pour venir épouser la forme de l'orifice à obturer. La plaque d'obturation est fixée sur la nacelle à l'aide d'ergots de fixation métalliques en saillie vers l'extérieur de la nacelle. Une telle plaque d'obturation présente l'inconvénient d'être particulièrement lourde et sensible aux chutes et impacts, de sorte qu'elle représente un danger pour les personnes circulant autour de l'aéronef, et également pour les autres véhicules ou matériels présents au sol.

Par ailleurs, les ergots de fixation représentent un danger pour les personnes circulant autour de l'aéronef, puisqu'ils sont réalisés en matériau métallique rigide et sont saillants par rapport à la plaque d'obturation. Ils risquent également d'endommager la nacelle lors de leur fixation sur ladite nacelle. La rigidité d'un tel organe d'obturation impose des tolérances de fabrication très faibles afin de garantir la fonctionnalité de l'organe d'obturation.

FR 2 936 778 A1 divulgue un organe d'obturation selon le préambule de la revendication 1.

### Exposé de l'invention

La présente invention a donc pour but de palier les inconvénients des organes d'obturation précités et de proposer un organe d'obturation des ouvertures extérieures d'une nacelle pour moteur d'aéronef capable de s'adapter aux variations géométriques des ouvertures, tout en assurant une meilleure protection de la nacelle lors de la fixation dudit organe d'obturation sur la nacelle, et des personnes et/ou des éléments matériels présents au sol lors de la chute dudit organe d'obturation.

L'objectif de l'invention est donc de permettre une obturation aisée et à faible coût d'une ouverture extérieure d'une nacelle pour moteur d'aéronef.

L'invention a donc pour objet un organe d'obturation amovible configuré pour obturer une partie femelle, telle que par exemple un organe d'entrée d'air ou de ventilation, logé dans une ouverture extérieure pratiquée dans la surface extérieure d'une nacelle pour moteur d'aéronef. Ladite partie femelle comprend au moins un orifice débouchant dans la nacelle.

Ledit organe d'obturation comprend une embase formant le contour extérieur dudit organe et destiné à s'étendre au-delà de l'ouverture extérieure de la nacelle de manière à venir en appui sur la surface extérieure de ladite nacelle et au moins un organe de maintien en position élastiquement déformable configuré pour s'insérer dans l'orifice de la partie femelle.

L'organe de maintien en position élastiquement déformable permet d'assurer le maintien en position de l'organe d'obturation dans la partie femelle associée.

Ainsi, l'organe d'obturation est capable de s'adapter aux variations géométriques des ouvertures, tout en assurant une meilleure protection de la nacelle lors de la fixation dudit organe sur la nacelle puisque la fixation est réalisée par déformation des parties déformables dudit organe.

L'organe de maintien peut être en saillie depuis l'embase.

Par « nacelle », on entend le carter ou carénage entourant le moteur d'aéronef et formant avec le moteur un ensemble propulsif. Le moteur peut notamment être un turboréacteur ou un turbopropulseur.

Par organe « élastiquement déformable », on entend tout organe capable de se déformer de manière réversible sous l'action d'une sollicitation extérieure et de reprendre sa forme initiale à l'arrêt de ladite sollicitation.

Avantageusement, l'organe d'obturation comprend un moyen de préhension s'étendant à partir de l'embase en saillie vers l'extérieur, du côté opposé à l'organe de maintien en position. Par exemple, le moyen de préhension peut être une poignée, un anneau, une boucle, une corde ou tout autre organe de manipulation capable de manipuler l'organe d'obturation. Par exemple, l'organe d'obturation comprenant un noyau en mousse entouré par une couche d'élastomère, par exemple par projection.

Ainsi, le risque d'endommagement des personnes et/ou des éléments matériels présents au sol lors de la chute dudit organe d'obturation est réduit grâce à la faible masse dudit organe. L'organe d'obturation est par ailleurs facile à produire et à faible coût.

Selon un mode de réalisation, l'organe d'obturation comprend deux portions inclinées, chacune destinée à coopérer avec une ailette de la partie femelle, l'organe de maintien dudit organe d'obturation étant configuré pour coopérer avec au moins un des orifices de ladite partie femelle.

Avantageusement, l'embase dudit organe d'obturation comprend au moins une première partie s'étendant selon une direction sensiblement normale aux portions inclinées et reliées auxdites portions inclinées.

De manière nullement limitative, la première partie forme un axe de symétrie de l'organe d'obturation.

Avantageusement, l'organe d'obturation comprend deux portions latérales s'étendant de part et d'autre de la première partie et configurées pour coopérer avec des parties d'ailettes de la partie femelle, chacune des portions latérales comprenant une pluralité de portions inclinées.

Par exemple, chacune des portions latérales comprend deux portions inclinées d'extrémités et au moins une portion inclinée centrale, l'organe de maintien comprenant deux tenons d'extrémité configurés pour coopérer chacun avec un orifice d'extrémité de la partie femelle et au moins un tenon central configuré pour coopérer avec un orifice central de ladite partie femelle.

Au moins les tenons d'extrémités peuvent comprendre chacun une lèvre en saillie depuis l'extrémité libre dudit tenon et s'étendant vers une ailette inclinée d'extrémité de la partie femelle.

Selon un autre mode de réalisation, l'organe de maintien en position comprend un tenon en saillie depuis l'embase vers la partie femelle et comportant une lèvre en saillie de l'extrémité libre dudit tenon et configurée pour venir s'insérer dans l'orifice de ladite partie femelle.

Selon un second aspect, l'invention concerne une nacelle pour moteur d'aéronef comprenant une surface extérieure de révolution comportant au moins une ouverture extérieure destinée à recevoir une partie femelle et comprenant au moins un organe d'obturation tel que défini précédemment configuré pour obturer temporairement ladite partie femelle, par exemple lors d'un arrêt au sol prolongé de l'aéronef. L'organe d'obturation est destiné à être retiré avant la phase de vol de l'aéronef.

L'ouverture extérieure est pratiquée dans l'épaisseur de la nacelle et débouche sur la surface extérieure de ladite nacelle.

Selon un mode de réalisation, la partie femelle est un organe de ventilation ou grille de ventilation, appelée « ventilation grid » en termes anglo-saxons, comprenant une portion de fixation fixée sur la nacelle, par exemple contre une surface intérieure de ladite nacelle par des éléments de fixation, tels que, par exemple, des rivets, au moins deux ailettes de ventilation reliées à la portion de fixation et des orifices d'évacuation ménagés entre deux ailettes adjacentes. La grille de ventilation est configurée pour être obturée par un premier organe d'obturation comprenant deux portions inclinées chacune destinée à coopérer avec une ailette de la grille de ventilation. L'organe de maintien du premier organe d'obturation est configuré pour coopérer avec au moins un des orifices d'évacuation de ladite grille.

Avantageusement, la grille de ventilation comprend une portion, par exemple centrale, formant un axe de symétrie de ladite grille de ventilation, et deux parties d'ailettes situées de part et d'autre de la portion centrale et comprenant chacune une pluralité d'ailettes de ventilation reliées à la portion centrale. L'embase du premier organe d'obturation comprend une première partie et deux portions latérales s'étendant de part et d'autre de ladite première partie et configurées pour coopérer avec les parties d'ailettes de la grille de ventilation, chacune des parties latérales comprenant une pluralité de portions inclinées destinées chacune à coopérer avec une ailette de la grille de ventilation.

Par exemple, chaque partie d'ailettes comprend deux ailettes d'extrémité, au moins une ailette centrale, deux orifices d'évacuation d'extrémité ménagés respectivement entre la portion de fixation et une première ailette d'extrémité et entre une deuxième ailette d'extrémité, une ailette centrale adjacente, et au moins un orifice d'évacuation central ménagé entre la première ailette d'extrémité et l'ailette centrale. Chacune des portions latérales du premier organe d'obturation comprend deux portions inclinées d'extrémités et au moins une portion inclinée centrale, l'organe de maintien du premier organe d'obturation sur la grille de ventilation comprenant deux tenons d'extrémité configurés pour coopérer chacun avec un orifice d'évacuation d'extrémité et au moins un tenon central configuré pour coopérer avec l'orifice d'évacuation central.

En variante, on pourrait prévoir un nombre différent d'ailettes centrales. Les ailettes forment des parois inclinées selon une même direction et un même angle d'inclinaison.

En variante, on pourrait prévoir des parois inclinées selon des angles d'inclinaison différents.

Les orifices de ventilation débouchent à l'intérieur de la nacelle afin d'acheminer de l'air vers le moteur.

La grille de ventilation est réalisée en matériau rigide.

En variante, on pourrait prévoir un nombre différent de portions inclinées centrales. Les portions inclinées sont inclinées selon une même direction et un même angle d'inclinaison.

En variante, on pourrait prévoir des portions inclinées selon des angles d'inclinaison différents.

Les tenons d'extrémité relient respectivement l'embase à une première portion d'extrémité inclinée et la deuxième portion d'extrémité inclinée à une portion centrale inclinée adjacente.

Avantageusement, au moins les tenons d'extrémités comprennent chacun une lèvre ou excroissance en saillie à partir de l'extrémité libre dudit tenon et s'étendant vers une ailette inclinée d'extrémité de la grille de ventilation.

Les lèvres de l'organe d'obturation sont configurées pour se déformer élastiquement lors de la mise en place dudit organe d'obturation sur la grille de ventilation et viennent s'insérer sous l'ailette associée et ainsi maintenir en place l'organe d'obturation.

Selon un autre mode de réalisation, la partie femelle est un organe d'entrée d'air ou une écope, appelée « ventilation scoop » en termes anglo-saxons, comprenant une portion de fixation fixée sur la nacelle, par exemple contre une surface intérieure de ladite nacelle par des éléments de fixation, tels que, par exemple, des rivets, un fond relié d'un côté à la portion de fixation et une paroi rigide reliée à un deuxième côté de la portion de fixation et délimitant avec ledit fond un orifice d'entrée d'air. L'écope est configurée pour être obturée par un deuxième organe d'obturation. L'embase du deuxième organe d'obturation comprend en outre un tenon en saillie depuis l'embase vers l'écope et comportant une lèvre ou excroissance en saillie à partir de l'extrémité libre dudit tenon et configurée pour venir s'insérer dans l'orifice d'entrée d'air de l'écope.

Le tenon est configuré pour se déformer élastiquement lors de la mise en place du deuxième organe d'obturation sur l'écope et sa lèvre vient s'insérer sous la paroi rigide dans l'orifice d'entrée d'air et ainsi maintient en place ledit organe d'obturation.

Le deuxième organe d'obturation est installé en insérant le tenon dans l'orifice de l'écope, déformant élastiquement sa lèvre.

L'orifice d'entrée d'air débouche à l'intérieur de la nacelle afin d'acheminer de l'air vers le moteur.

La portion de fixation forme un contour de l'écope.

La paroi rigide s'étend au-delà de l'ouverture de la nacelle.

L'écope est réalisée en matériau rigide.

Par exemple, la nacelle comprend au moins une première ouverture, un organe de ventilation logé dans ladite première ouverture et configuré pour être obturé par un premier organe d'obturation, au moins une deuxième ouverture et un organe d'entrée d'air logé dans ladite deuxième ouverture configurée pour être obturée par un deuxième organe d'obturation.

Le premier et le deuxième organe d'obturation sont structurellement différents.

### Brève description des dessins

D'autres buts, caractéristiques et avantages de l'invention apparaîtront à la lecture de la description suivante, donnée uniquement à titre d'exemple non limitatif, et faite en référence aux dessins indexés sur lesquels :

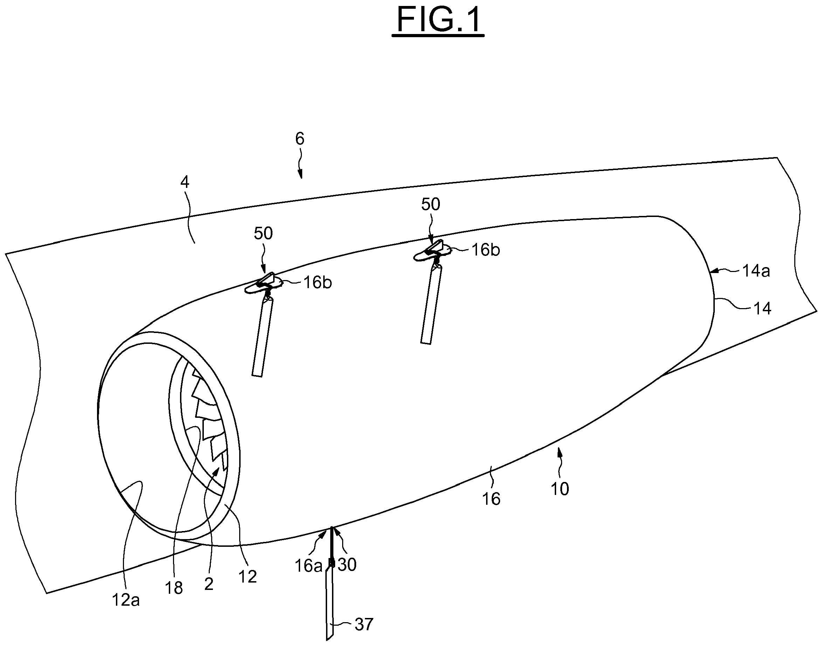

[Fig 1] illustre très schématiquement une vue en perspective d'une nacelle pour moteur d'aéronef comprenant des organes d'obturation selon deux modes de réalisation de l'invention ;
[Fig 2]
[Fig 3] représentent un organe d'obturation selon un premier mode de réalisation, respectivement avant et après mise en place dans une ouverture extérieure de la nacelle de la figure 1 ;
[Fig 4] est une vue en coupe de l'organe d'obturation de la figure 3 ;
[Fig 5A]

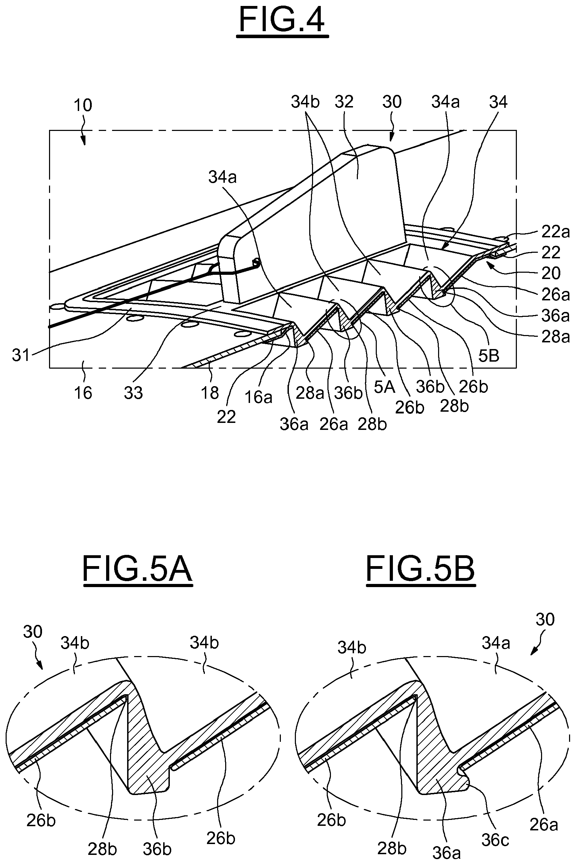

[Fig 5B] sont des vues de détails de l'organe d'obturation de la figure 4 ;

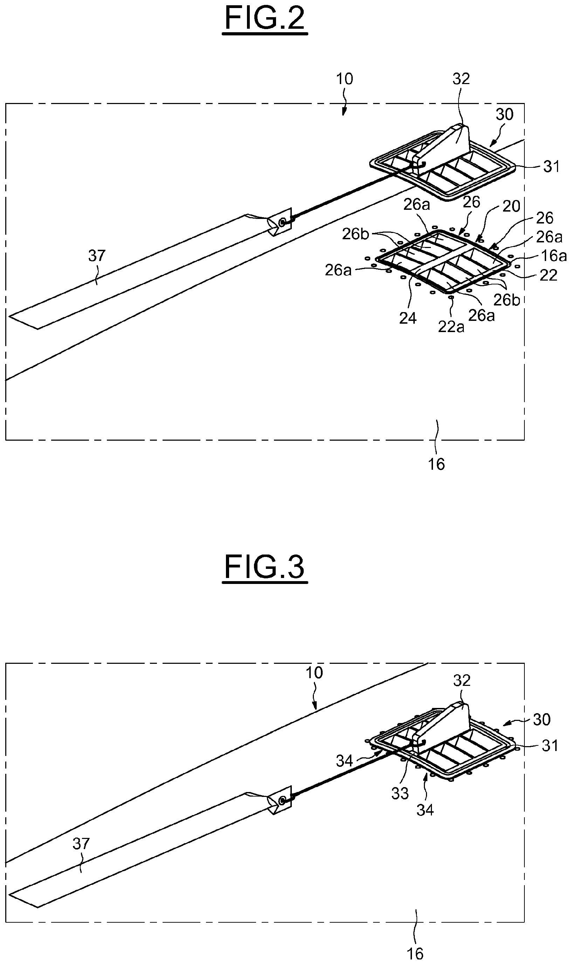

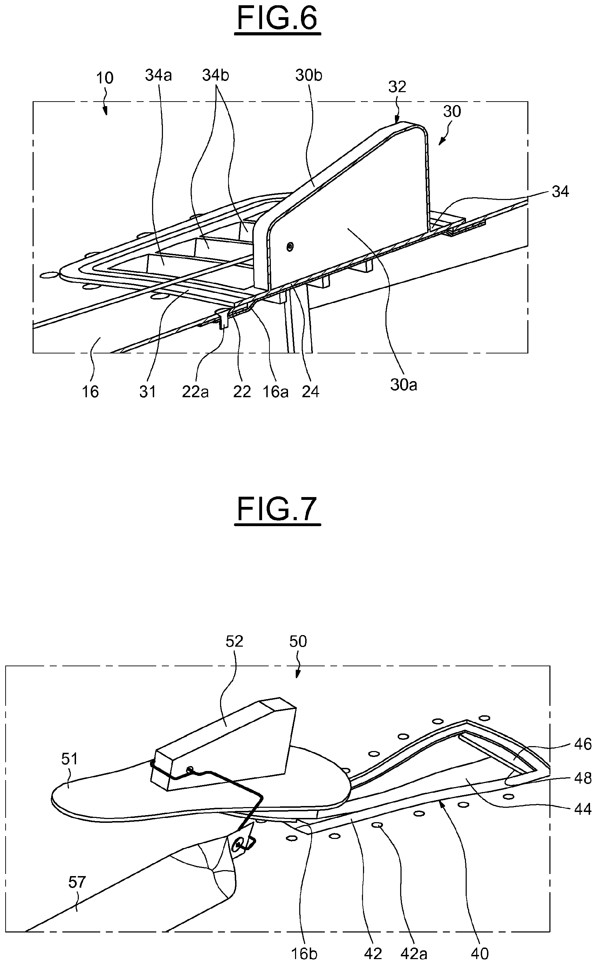

[Fig 6] est une vue en coupe de l'organe d'obturation de la figure 3 selon un plan de coupe passant par une portion centrale ;
[Fig 7]

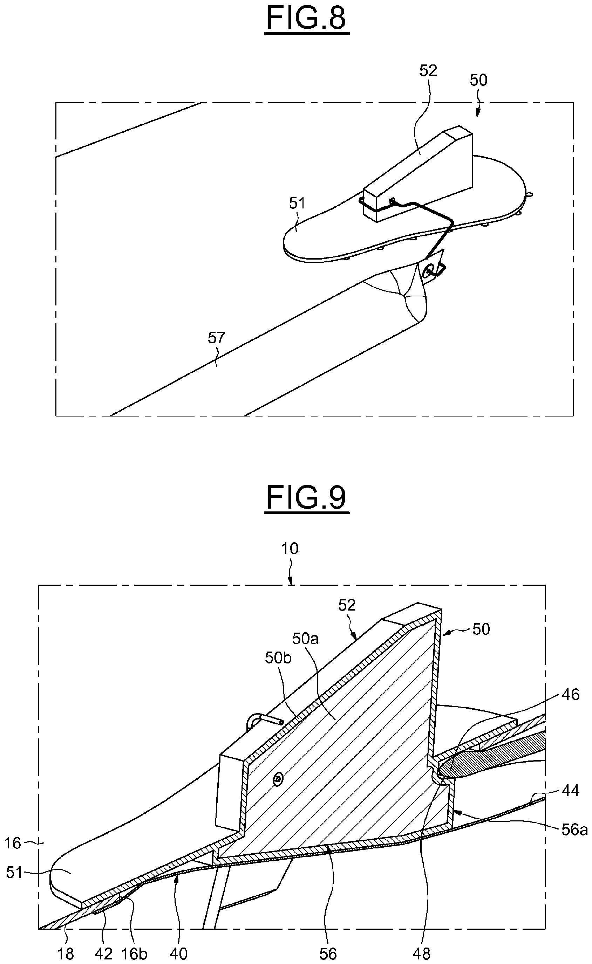

[Fig 8] représentent un organe d'obturation selon un deuxième mode de réalisation, respectivement avant et après mise en place dans une ouverture extérieure de la nacelle de la figure 1 ; et
[Fig 9] est une vue en coupe de l'organe d'obturation de la figure 8.

### Exposé détaillé d'au moins un mode de réalisation

Sur la figure 1 est représentée très schématiquement une nacelle 10 pour un moteur 2 d'aéronef destinée à être relié au fuselage 4 d'un aéronef 6. Par soucis de clarté, seule la soufflante du moteur 2 est visible sur la figure 1.

La nacelle 10 est délimitée axialement par un bord d'attaque 12 et un bord de fuite 14, opposée audit bord d'attaque 12, et radialement par une surface extérieure 16 et une surface intérieure 18. De manière non limitative, la surface extérieure 16 illustrée est une surface de révolution.

Les bords d'attaque et de fuite 12, 14 comprennent une ouverture 12a, 14a, respectivement, pour l'entrée d'air et la sortie des gaz d'échappement du moteur 2.

Telle qu'illustrée sur la figure 1, la nacelle 10 comprend une première ouverture 16a pratiquée dans l'épaisseur de la nacelle 10 et débouchant sur la surface extérieure 16 de ladite nacelle 10. Telle qu'illustrée, la première ouverture 16a est située sur une partie inférieure de la surface extérieure 16 de la nacelle 10. Alternativement, on pourrait prévoir que la nacelle comprenne un nombre de premières ouvertures supérieur à un, par exemple supérieur ou égal à deux. On pourrait également prévoir que la première ouverture soit située à un autre endroit de la nacelle que sa partie inférieure.

La première ouverture 16a est destinée à recevoir un organe de ventilation ou grille de ventilation 20 appelée « ventilation grid » en termes anglo-saxons.

La grille de ventilation 20 est visible en détails sur les figures 4 et 6. La grille de ventilation 20 est réalisée en matériau rigide.

La grille de ventilation 20 comprend une portion de fixation 22 fixée sur la nacelle 10, par exemple ici contre la surface intérieure 18 de ladite nacelle par des éléments de fixation 22a, tels que, par exemple, des rivets. En variante, la portion de fixation 22 pourrait être intégrée à la nacelle 10.

La portion de fixation 22 forme un contour de la grille de ventilation 20.

La grille de ventilation 20 comprend en outre une portion centrale 24, formant un axe de symétrie de ladite grille de ventilation 22 et deux parties d'ailettes 26 situées de part et d'autre de la portion centrale 24 et comprenant chacune une pluralité d'ailettes de ventilation 26a, 26b reliées à la portion centrale 24.

Tel qu'illustré sur la figure 4, chaque partie d'ailettes 26 comprend deux ailettes d'extrémité 26a et deux ailettes centrales 26b. En variante, on pourrait prévoir un nombre différent d'ailettes centrales 26b. Les ailettes 26a, 26b forment des parois inclinées selon une même direction et un même angle d'inclinaison.

En variante, on pourrait prévoir des parois inclinées 26a, 26b selon des angles d'inclinaison différents.

La grille de ventilation 20 comprend en outre des orifices d'évacuation 28a, 28b ménagés entre deux ailettes adjacentes.

Plus spécifiquement, la grille 20 comprend deux orifices d'évacuation d'extrémité 28a ménagés respectivement entre la portion de fixation 22 et une première ailette d'extrémité 26a et entre une deuxième ailette d'extrémité 26a et une ailette centrale adjacente.

Les orifices d'évacuation 28a, 28b débouchent à l'intérieur de la nacelle 10 afin d'évacuer de l'air du moteur 2 vers l'extérieur.

Un premier organe d'obturation 30 amovible est configuré pour obturer temporairement la première ouverture extérieure 16a, par exemple lors d'un arrêt au sol prolongé de l'aéronef.

Le premier organe d'obturation 30 est illustré en détails sur les figures 2 à 6.

Le premier organe d'obturation 30 comprend une embase 31 formant le contour extérieur dudit organe et une poignée 32 s'étendant en saillie à partir de l'embase 31. L'embase 31 s'étend au-delà de l'ouverture extérieure 16a de la nacelle 10 de manière à venir en appui sur la surface extérieure 16 de ladite nacelle.

L'embase 31 comprend une première partie 33 et deux portions latérales 34 s'étendant de part et d'autre de la première partie 33. Tel qu'illustré, la première partie 33 s'étend selon une direction sensiblement normale aux portions latérales 34 et est reliée auxdites portions latérales 34.

De manière nullement limitative, la première partie 33 est centrale et forme un axe de symétrie de l'organe d'obturation 30.

Les portions latérales 34 sont configurées pour coopérer avec les parties d'ailettes 26 de la grille de ventilation 20.

Chacune des portions latérales 34 comprend une pluralité de portions inclinées 34a, 34b chacune destinée à coopérer avec une ailette 26a, 26b de la grille de ventilation 20.

Tel qu'illustré, chaque portion latérale 34 comprend deux portions inclinées d'extrémités 34a et deux portions inclinées centrales 34b. En variante, on pourrait prévoir un nombre différent de portions inclinées centrales 34b. Les portions inclinées 34a, 34b sont inclinées selon une même direction et un même angle d'inclinaison.

En variante, on pourrait prévoir des portions inclinées 34a, 34b selon des angles d'inclinaison différents.

Chacune des portions latérales 34 comprend en outre des tenons 36a, 36b en saillie depuis l'embase 31 vers la grille de ventilation 20 et configurés pour venir s'insérer dans un orifice d'évacuation 28a, 28b correspondant de la grille de ventilation 20.

Plus spécifiquement, chacune des portions latérales 34 comprend deux tenons d'extrémité 36a et deux tenons centraux 36b. le nombre de tenons centraux étant dépendant du nombre d'ailettes centrales 26b.

Les tenons d'extrémité 36a relient respectivement l'embase 31 à une première portion d'extrémité inclinée 34a et la deuxième portion d'extrémité inclinée 34a à une portion centrale inclinée 36b adjacente.

Les tenons d'extrémités 36a comprennent chacun une lèvre 36c ou excroissance en saillie à partir de l'extrémité libre dudit tenon et s'étendant vers une ailette inclinée d'extrémité 26a de la grille de ventilation 20.

Les lèvres 36c sont configurées pour se déformer élastiquement lors de la mise en place de l'organe d'obturation 30 sur la grille de ventilation 20 et vient s'insérer sous l'ailette 26a associée et ainsi maintenir en place l'organe d'obturation.

En l'espèce, la lèvre 36c du tenon est déformée par contact avec une paroi inclinée rigide de la grille de ventilation et vient s'encliqueter sur ladite paroi inclinée rigide, dans l'orifice d'évacuation correspondant.

Les tenons d'extrémité 36a dont les lèvres 36c viennent s'agripper dans une paroi rigide 26a de la grille de ventilation 20 permettant d'assurer l'immobilisation du premier organe d'obturation 30.

En variante, on pourrait prévoir que chacun des tenons 36a, 36b comprenne une lèvre élastiquement déformable configurée pour coopérer avec une ailette de la grille de ventilation 20.

Le premier organe d'obturation 30 est installé uniquement par un effort de pression de celui-ci sur la grille de ventilation 20, déformant élastiquement la lèvre 36c du tenon 36a correspondant.

Le premier organe d'obturation 30 est symétrique par rapport à sa première portion 33.

Tel qu'illustré en détails sur la figure 6, le premier organe d'obturation 30 est une pièce monobloc réalisée en matériau composite à partir d'un noyau 30a en mousse enrobée d'une couche 30b élastomère projeté. Le noyau 30a en mousse est, par exemple, réalisé par injection ou extrusion, usiné, imprimé en trois dimensions ou réalisé par tout autre moyen de réalisation d'une mousse.

Tel qu'illustré sur la figure 6, la poignée 32 comprend le noyau 30a en mousse entouré de la couche 30b d'élastomère projeté formant l'embase 31. L'embase 31 est réalisée dans la même phase de projection d'élastomère sur un gabarit réalisé en fabrication additive.

La couche 30b d'élastomère peut être, par exemple, du polyuréthane.

De manière nullement limitative, le premier organe d'obturation 30 comprend une languette d'extraction 37 fixée à la poignée et permettant le déclipsage de l'organe d'obturation de la grille de ventilation lors d'une sollicitation externe de traction sur ladite languette.

Telle qu'illustrée sur la figure 1, la nacelle 10 comprend deux deuxièmes ouvertures 16b pratiquées dans l'épaisseur de la nacelle 10, notamment mais non exclusivement sur sa partie supérieure, et débouchant sur la surface extérieure 16 de ladite nacelle 10. Alternativement, on pourrait prévoir que la nacelle comprenne un nombre de deuxièmes ouvertures différent de deux, par exemple égal à un, ou par exemple supérieur ou égal à trois. On pourrait également prévoir que les deuxièmes ouvertures soient situées à un autre endroit de la nacelle que sa partie supérieure.

Chaque deuxième ouverture 16b est destinée à recevoir un organe d'entrée d'air ou écope 40 appelée « « ventilation scoop » en termes anglo-saxons.

L'écope 40 est visible en détails sur les figures 7 et 9. L'écope 40 est réalisée en matériau rigide.

L'écope 40 comprend une portion de fixation 42 fixée contre la surface intérieure 18 de la nacelle 10 par des éléments de fixation 42a, tels que, par exemple, des rivets.

La portion de fixation 42 forme un contour de l'écope 40.

L'écope 40 comprend en outre un fond 44 relié d'un côté à la portion de fixation 42 et une paroi rigide 46 reliée à un deuxième côté de la portion de fixation 42 et délimitant avec ledit fond 44 un orifice d'entrée d'air 48 débouchant à l'intérieur de la nacelle 10 afin d'acheminer de l'air frais vers le moteur 2.

La paroi rigide 46 s'étend au-delà de l'ouverture 16b de la nacelle 10.

Chaque deuxième organe d'obturation 50 amovible est configuré pour obturer temporairement l'une des deuxièmes ouvertures extérieures 16b, par exemple lors d'un arrêt au sol prolongé de l'aéronef.

Le deuxième organe d'obturation 50 est illustré en détails sur les figures 7 à 9.

Le deuxième organe d'obturation 50 comprend une embase 51 formant le contour extérieur dudit organe et un moyen de préhension, telle qu'une poignée 52 s'étendant en saillie de l'embase 51. L'embase 51 s'étend au-delà de l'ouverture extérieure 16b de la nacelle 10 de manière à venir en appui sur la surface extérieure 16 de ladite nacelle.

L'embase 51 comprend en outre un tenon 56 en saillie depuis l'embase 51 vers l'écope 40.

Le tenon 56 comprend une lèvre 56a ou excroissance en saillie à partir de l'extrémité libre dudit tenon et configurée pour venir s'insérer dans l'orifice d'entrée d'air 48 de l'écope 40.

Le tenon 56 est configuré pour se déformer élastiquement lors de la mise en place du deuxième organe d'obturation 50 sur l'écope 40 et sa lèvre 56a vient s'insérer sous la paroi rigide 46 dans l'orifice d'entrée d'air 48 et ainsi maintient en place ledit organe d'obturation 50.

En d'autres termes, la lèvre 56a du tenon 56 est déformée par contact avec une paroi rigide de l'écope 40 et vient s'encliqueter sur ladite paroi rigide, dans l'orifice d'entrée d'air correspondant.

La lèvre élastiquement déformable vient s'agripper dans une paroi rigide 46 de l'écope 40 permettant d'assurer l'immobilisation du deuxième organe d'obturation 50.

Le deuxième organe d'obturation 50 est installé en insérant le tenon dans l'orifice de l'écope 40, déformant élastiquement sa lèvre 56a.

Le deuxième organe d'obturation 50 est symétrique par rapport à sa poignée 52.

Tel qu'illustré en détails sur la figure 9, le deuxième organe d'obturation 50 est une pièce monobloc réalisée en matériau composite à partir d'un noyau 50a en mousse enrobé d'une couche 50b élastomère projeté. Le noyau 50a en mousse est, par exemple, réalisé par injection ou extrusion, usiné, imprimé en trois dimensions ou réalisé par tout autre moyen de réalisation d'une mousse.

Tel qu'illustré sur la figure 9, la poignée 52 comprend le noyau 50a en mousse entouré de la couche 50b d'élastomère projeté formant l'embase 51. L'embase 51 est réalisée dans la même phase de projection d'élastomère sur un gabarit réalisé en fabrication additive.

La couche 50b d'élastomère peut être, par exemple, du polyuréthane.

De manière nullement limitative, le deuxième organe d'obturation 50 comprend une languette d'extraction 57 fixée à la poignée et permettant le dé-clipsage de l'organe d'obturation de l'écope lors d'une sollicitation externe de traction sur ladite languette.

De manière générale, la grille de ventilation 20 et l'écope 40 forment des parties femelles logées respectivement dans une ouverture extérieure 16a, 16b pratiquée sur la surface extérieure 16 de révolution de la nacelle 10. Les organes d'obturation des parties femelles 30, 50 doivent être retirés avant la phase de vol de l'aéronef, afin de laisser l'ensemble des ouvertures extérieures ouvertes.

De manière générale, le(s) tenon(s) des organes d'obturation sont des organes de maintien en position élastiquement déformables configurés pour assurer le maintien en position de l'organe d'obturation dans la partie femelle associée.

Grâce aux organes d'obturation décrits, le risque de blessure est significativement réduit grâce à la réduction du poids et à l'absence de pièce rigide saillante sur ledit organe.

La nacelle n'est plus endommagée lors de la mise en place de l'organe d'obturation dans la partie femelle associée.

L'organe d'obturation est une pièce monobloc, ce qui réduit considérablement le nombre de pièces et le temps de fabrication dudit organe, engendrant une réduction significative du coût de fabrication et de manutention.

L'utilisation d'un matériau composite souple pour l'organe d'obturation permet de s'adapter aux variations dimensionnelles des interfaces.

## Revendications

1. Organe d'obturation (30, 50) amovible configuré pour obturer une partie femelle (20, 40) logée dans une ouverture extérieure (16a, 16b) pratiquée dans la surface extérieure (16) d'une nacelle (10) pour moteur (2) d'aéronef, ladite partie femelle (20, 40) comprenant au moins un orifice (28a, 28b, 48) débouchant dans la nacelle (10), **caractérisé en ce que** ledit organe d'obturation (30, 50) comprend une embase (31, 51) formant le contour extérieur dudit organe et destinée à s'étendre au-delà de l'ouverture extérieure (16a, 16b) de la nacelle (10) de manière à venir en appui sur la surface extérieure (16) de ladite nacelle et au moins un organe de maintien en position (36a, 56) élastiquement déformable en saillie depuis l'embase (31, 51) et configuré pour s'insérer dans l'orifice (28a, 28b, 48) de la partie femelle (20, 40).

2. Organe d'obturation (30, 50) selon la revendication 1, comprenant un moyen de préhension (32, 52) s'étendant à partir de l'embase (31, 51) en saillie vers l'extérieur, du côté opposé à l'organe de maintien en position (36a, 56).

3. Organe d'obturation (30, 50) selon la revendication 1 ou 2, comprenant un noyau (30a, 50a) en mousse entouré par une couche d'élastomère (30b, 50b).

4. Organe d'obturation (30) selon l'une quelconque des revendications précédentes, comprenant deux portions inclinées (34a, 34b) chacune destinée à coopérer avec une ailette (26a, 26b) de la partie femelle (20), l'organe de maintien (36) dudit organe d'obturation (30) étant configuré pour coopérer avec au moins un des orifices (28a, 28b) de ladite partie femelle (20).

5. Organe d'obturation (30) selon la revendication 4, dans lequel l'embase (31) dudit organe d'obturation (30) comprend une première partie (33) s'étendant selon une direction sensiblement normale aux portions inclinées (34a, 34b) et reliée auxdites portions inclinées (34a, 34b).

6. Organe d'obturation (30) selon la revendication 5, dans lequel la première partie (33) forme un axe de symétrie de l'organe d'obturation (30).

7. Organe d'obturation (30) selon la revendication 5 ou 6, comprenant deux portions latérales (34) s'étendant de part et d'autre de la première partie (33) et configurées pour coopérer avec des parties d'ailettes (26) de la partie femelle (20), chacune des portions latérales (34) comprenant une pluralité de portions inclinées (34a, 34b).

8. Organe d'obturation (30) selon la revendication 7, dans lequel chacune des portions latérales (34) comprend deux portions inclinées d'extrémités (34a) et au moins une portion inclinée centrale (34b), l'organe de maintien (36a, 36b) comprenant deux tenons d'extrémité (36a) configurés pour coopérer chacun avec un orifice d'extrémité (28a) de la partie femelle (20) et au moins un tenon central (36b) configuré pour coopérer avec un orifice central (28b) de ladite partie femelle (20).

9. Organe d'obturation (30) selon la revendication 8, dans lequel au moins les tenons d'extrémités (36a) comprennent chacun une lèvre (36c) en saillie depuis l'extrémité libre dudit tenon et s'étendant vers une ailette inclinée d'extrémité (26a) de la partie femelle (20).

10. Organe d'obturation (50) selon l'une quelconque des revendications 1 à 3, dans lequel l'organe de maintien en position (56) comprend un tenon (56) en saillie depuis l'embase (51) vers la partie femelle (40) et comportant une lèvre (56a) en saillie de l'extrémité libre dudit tenon (56) et configurée pour venir s'insérer dans l'orifice (48) de ladite partie femelle (40).

11. Nacelle (10) pour moteur d'aéronef comprenant une surface extérieure (16) comportant au moins une ouverture extérieure (16a, 16b) destinée à recevoir une partie femelle (20, 40) et comprenant au moins un organe d'obturation (30, 50) selon l'une quelconque des revendications précédentes configuré pour obturer temporairement ladite partie femelle (20, 40).

12. Nacelle selon la revendication 11, dans laquelle la partie femelle (20) est un organe de ventilation d'air (20)comprenant une portion de fixation (22) fixée sur la nacelle (10), au moins deux ailettes de ventilation (26a, 26b) reliées à la portion de fixation (22) et des orifices d'évacuation (28a, 28b) ménagés entre deux ailettes adjacentes, l'organe d'évacuation d'air (20) étant configuré pour être obturé par un premier organe d'obturation (30) selon l'une quelconque des revendications 4 à 9.

13. Nacelle selon la revendication 11, dans laquelle la partie femelle (40) est un organe d'entrée d'air comprenant une portion de fixation (42) fixée sur la nacelle (10), un fond (44) relié d'un côté à la portion de fixation (42) et une paroi rigide (46) reliée à un deuxième côté de la portion de fixation (42) et délimitant avec ledit fond (44) un orifice d'entrée d'air (48), l'organe d'entrée d'air (40) étant configuré pour être obturé par un organe d'obturation (50) selon la revendication 10.

14. Nacelle selon l'une quelconque des revendications 11 à 12 et la revendication 13, comprenant au moins une première ouverture (16a), un organe de ventilation (20) logé dans ladite première ouverture (16a) et configuré pour être obturé temporairement par un premier organe d'obturation (30), au moins une deuxième ouverture (16b) et un organe d'entrée d'air (40) logé dans ladite deuxième ouverture (16b) et configuré pour être obturé temporairement par un deuxième organe d'obturation (50).

## Patentansprüche

1. Abnehmbares Verschlusselement (30, 50), das konfiguriert ist, um ein weibliches Teil (20, 40) zu verschließen, das in einem äußeren Ausschnitt (16a, 16b) untergebracht ist, der in der äußeren Oberfläche (16) einer Gondel (10) eines Luftfahrzeugmotors (2) ausgeführt ist, wobei das weibliche Teil (20, 40) mindestens eine Öffnung (28a, 28b, 48) umfasst, die in die Gondel (10) mündet, **dadurch gekennzeichnet, dass** das Verschlusselement (30, 50) eine Grundplatte (31, 51) umfasst, die die äußere Kontur des Elements bildet und dazu bestimmt ist, sich über den äußeren Ausschnitt (16a, 16b) der Gondel (10) hinaus zu erstrecken, so dass sie sich auf der äußeren Oberfläche (16) der Gondel abstützt, und mindestens ein elastisch verformbares Positionshalteelement (36a, 56), das von der Grundplatte (31, 51) vorsteht und konfiguriert ist, um in die Öffnung (28a, 28b, 48) des weiblichen Teils (20, 40) eingeführt zu werden.

2. Verschlusselement (30, 50) nach Anspruch 1, ein Greifmittel (32, 52) umfassend, das sich von der nach außen vorstehenden Grundplatte (31, 51) erstreckt, auf der dem Positionshalteelement (36a, 56) gegenüberliegenden Seite.

3. Verschlusselement (30, 50) nach Anspruch 1 oder 2, einen Schaumkern (30a, 50a) umfassend, der von einer Elastomerschicht (30b, 50b) umgeben ist.

4. Verschlusselement (30) nach einem der vorhergehenden Ansprüche, zwei geneigte Abschnitte (34a, 34b) umfassend, die jeweils dazu bestimmt sind, mit einer Rippe (26a, 26b) des weiblichen Teils (20) zusammenzuwirken, wobei das Halteelement (36) des Verschlusselements (30) konfiguriert ist, um mit mindestens einer der Öffnungen (28a, 28b) des weiblichen Teils (20) zusammenzuwirken.

5. Verschlusselement (30) nach Anspruch 4, wobei die Grundplatte (31) des Verschlusselements (30) ein erstes Teil (33) umfasst, das sich in einer im Wesentlichen senkrechten Richtung zu den geneigten Abschnitten (34a, 34b) erstreckt und mit den geneigten Abschnitten (34a, 34b) verbunden ist.

6. Verschlusselement (30) nach Anspruch 5, wobei das erste Teil (33) eine Symmetrieachse des Verschlusselements (30) bildet.

7. Verschlusselement (30) nach Anspruch 5 oder 6, zwei seitliche Abschnitte (34) umfassend, die sich zu beiden Seiten des ersten Teils (33) erstrecken und konfiguriert sind, um mit Rippenteilen (26) des weiblichen Teils (20) zusammenzuwirken, wobei jeder der seitlichen Abschnitte (34) eine Vielzahl von geneigten Abschnitten (34a, 34b) umfasst.

8. Verschlusselement (30) nach Anspruch 7, wobei jeder der seitlichen Abschnitte (34) zwei geneigte Abschnitte des Endes (34a) und mindestens einen zentralen geneigten Abschnitt (34b) umfasst, wobei das Positionshalteelement (36a, 36b) zwei Zapfen des Endes (36a) umfasst, die konfiguriert sind, um jeweils mit einer Öffnung des Endes (28a) des weiblichen Teils (20) zusammenzuwirken und mindestens einen zentralen Zapfen (36b), der konfiguriert ist, um mit einer zentralen Öffnung (28b) des weiblichen Teils (20) zusammenzuwirken.

9. Verschlusselement (30) nach Anspruch 8, wobei mindestens die Zapfen der Enden (36a) jeweils eine Lippe (36c) umfassen, die vom freien Ende des Zapfens vorsteht und sich zu einer geneigten Rippe des Endes (26a) des weiblichen Teils (20) erstreckt.

10. Verschlusselement (50) nach einem der Ansprüche 1 bis 3, wobei das Positionshalteelement (56) einen Zapfen (56) umfasst, der von der Grundplatte (51) zum weiblichen Teil (40) vorsteht und eine Lippe (56a) beinhaltet, die vom freien Ende des Zapfens (56) vorsteht und konfiguriert ist, um in die Öffnung (48) des weiblichen Teils (40) eingeführt zu werden.

11. Gondel (10) eines Luftfahrzeugmotors, eine äußere Oberfläche (16) umfassend, die mindestens einen äußeren Ausschnitt (16a, 16b) beinhaltet, der dazu bestimmt ist, ein weibliches Teil (20, 40) aufzunehmen, und mindestens ein Verschlusselement (30, 50) nach einem der vorhergehenden Ansprüche umfassend, das konfiguriert ist, um das weibliche Teil (20, 40) vorübergehend zu verschließen.

12. Gondel nach Anspruch 11, wobei das weibliche Teil (20) ein Luftventilationselement (20) ist, einen an der Gondel (10) befestigten Befestigungsabschnitt (22) umfassend, mindestens zwei mit dem Befestigungsabschnitt (22) verbundene Ventilationsrippen (26a, 26b) und Evakuierungsöffnungen (28a, 28b), die zwischen zwei benachbarten Rippen angeordnet sind, wobei das Luftevakuierungselement (20) konfiguriert ist, um durch ein erstes Verschlusselement (30) verschlossen zu werden, nach einem der Ansprüche 4 bis 9.

13. Gondel nach Anspruch 11, wobei das weibliche Teil (40) ein Lufteinlasselement ist, einen Befestigungsabschnitt (42) umfassend, einen Boden (44), der an der Gondel (10) befestigt und auf einer Seite mit dem Befestigungsabschnitt (42) verbunden ist, und eine starre Wand (46), die mit einer zweiten Seite des Befestigungsabschnitts (42) verbunden ist und mit dem Boden (44) eine Lufteinlassöffnung (48) begrenzt, wobei das Lufteinlasselement (40) konfiguriert ist, um mit einem Verschlusselement (50) nach Anspruch 10 verschlossen zu werden.

14. Gondel nach einem der Ansprüche 11 bis 12 und Anspruch 13, mindestens einen ersten Ausschnitt (16a) umfassend und ein Ventilationselement (20), das im ersten Ausschnitt (16a) untergebracht ist und konfiguriert ist, um vorübergehend mit einem ersten Verschlusselement (30) verschlossen zu werden, und mindestens einen zweiten Ausschnitt (16b) und ein Lufteinlasselement (40), das im zweiten Ausschnitt (16b) untergebracht ist und konfiguriert ist, um vorübergehend mit einem zweiten Verschlusselement (50) verschlossen zu werden.

## Claims

1. Removable closure member (30, 50) configured to close a female portion (20, 40) received in an external opening (16a, 16b) made in the external surface (16) of a nacelle (10) for an aircraft engine (2), said female portion (20, 40) comprising at least one opening (28a, 28b, 48) opening into the nacelle (10), **characterized in that** said closure member (30, 50) comprises a base (31, 51) forming the external contour of said member and intended to extend beyond the external opening (16a, 16b) of the nacelle (10) so as to move into abutment against the external surface (16) of said nacelle and at least one resiliently deformable position retention member (36a, 56) that projects from the base (31, 51) and is configured to be inserted into the opening (28a, 28b, 48) of the female portion (20, 40).

2. Closure member (30, 50) according to claim 1, comprising a gripping means (32, 52) extending from the base (31, 51) that projects towards the exterior, on the side opposite to the position retention member (36a, 56).

3. Closure member (30, 50) according to claim 1 or 2, comprising a core (30a, 50a) made of foam surrounded by a layer of elastomer (30b, 50b).

4. Closure member (30) according to any one of the previous claims, comprising two inclined portions (34a, 34b) each intended to cooperate with a fin (26a, 26b) of the female portion (20), the retention member (36) of said closure member (30) being configured to cooperate with at least one of the openings (28a, 28b) of said female portion (20).

5. Closure member (30) according to claim 4, wherein the base (31) of said closure member (30) comprises a first portion (33) extending according to a direction substantially normal to the inclined portions (34a, 34b) and connected to said inclined portions (34a, 34b).

6. Closure member (30) according to claim 5, wherein the first portion (33) forms an axis of symmetry of the closure member (30).

7. Closure member (30) according to claim 5 or 6, comprising two lateral portions (34) extending on either side of the first portion (33) and configured to cooperate with portions of fins (26) of the female portion (20), each of the lateral portions (34) comprising a plurality of inclined portions (34a, 34b).

8. Closure member (30) according to claim 7, wherein each of the lateral portions (34) comprises two inclined portions of ends (34a) and at least one central inclined portion (34b), the retention member (36a, 36b) comprising two end studs (36a) configured to each cooperate with an end opening (28a) of the female portion (20) and at least one central stud (36b) configured to cooperate with a central opening (28b) of said female portion (20).

9. Closure member (30) according to claim 8, wherein at least the studs of ends (36a) each comprise a lip (36c) that projects from the free end of said stud and extends towards an end inclined fin (26a) of the female portion (20).

10. Closure member (50) according to any one of claims 1 to 3, wherein the position retention member (56) comprises a stud (56) that projects from the base (51) towards the female portion (40) and includes a lip (56a) that projects from the free end of said stud (56) and is configured to be inserted into the opening (48) of said female portion (40).

11. Nacelle (10) for an aircraft engine comprising an external surface (16) including at least one external opening (16a, 16b) intended to receive a female portion (20, 40) and comprising at least one closure member (30, 50) according to any one of the previous claims configured to temporarily close said female portion (20, 40).

12. Nacelle according to claim 11, wherein the female portion (20) is an air ventilation member (20) comprising a fastening portion (22) fastened onto the nacelle (10), at least two ventilation fins (26a, 26b) connected to the fastening portion (22) and evacuation openings (28a, 28b) made between two adjacent fins, the air evacuation member (20) being configured to be closed by a first closure member (30) according to any one of claims 4 to 9.

13. Nacelle according to claim 11, wherein the female portion (40) is an air inlet member comprising a fastening portion (42) fastened onto the nacelle (10), a bottom (44) connected on one side to the fastening portion (42) and a rigid wall (46) connected to a second side of the fastening portion (42) and defining with said bottom (44) an air inlet opening (48), the air inlet member (40) being configured to be closed by a closure member (50) according to claim 10.

14. Nacelle according to any one of claims 11 to 12 and claim 13, comprising at least one first opening (16a), a ventilation member (20) received in said first opening (16a) and configured to be temporarily closed by a first closure member (30), at least one second opening (16b) and an air inlet member (40) received in said second opening (16b) and configured to be temporarily closed by a second closure member (50).
